# EUROPÄISCHE PATENTSCHRIFT

(11) **EP 1 139 607 B1**
(45) Veröffentlichungstag und Bekanntmachung des Hinweises auf die Patenterteilung: **22.08.2007**
(21) Anmeldenummer: 01000061.0
(22) Anmeldetag: 21.03.2001
(51) Int. Cl.: H04L 12/28, H04B 7/26

(54) **Drahtloses Netzwerk mit einem Zeitschlitzsortiermechanismus**
Wireless network with a time slot sorting mechanism
Réseau sans fil avec un mécanisme de triage d'intervalles de temps

(30) Priorität: 28.03.2000 DE 10015390
(43) Veröffentlichungstag der Anmeldung: 04.10.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, 52064, Aachen (DE); Herrmann, Christoph, 52064, Aachen (DE); May, Peter, 52064, Aachen (DE)
(74) Vertreter: Volmer, Georg

(56) Entgegenhaltungen:
- EP-A- 0 889 611
- R. SIGLE, T. RENGER: "Hierarchical scheduling strategies for wireless ATM MAC Protocols" PROCEEDINGS OF THE 3RD WORKSHOP ON PERSONAL WIRELESS COMMUNICATIONS (PWC'98), [Online] April 1998 (1998-04), Seiten 175-182, XP002255262 Tokyo, Japan Gefunden im Internet: <URL:www.ind.uni-stuttgart.de/content/publ ications/archive/si_pwc_tokyo_28154.pdf> [gefunden am 2003-09-17]
- UMEUCHI M ET AL: "DYNAMIC TIME-SLOT ASSIGNMENT SCHEMES FOR TDMA-BASED WIRELESS ATM" IEICE TRANSACTIONS ON COMMUNICATIONS, INSTITUTE OF ELECTRONICS INFORMATION AND COMM. ENG. TOKYO, JP, Bd. 80-B, Nr. 8, 1. August 1997 (1997-08-01), Seiten 1182-1190, XP000723087 ISSN: 0916-8516
- SIGLE R ET AL: "Impact of wireless access on traffic management in ATM networks" COMPUTER NETWORKS, ELSEVIER SCIENCE PUBLISHERS B.V., AMSTERDAM, NL, Bd. 31, Nr. 9-10, 7. Mai 1999 (1999-05-07), Seiten 985-997, XP004304533 ISSN: 1389-1286
- DU Y ET AL: "WIRELESS ATM LAN WITH AND WITHOUT INFRASTRUCTURE" IEEE COMMUNICATIONS MAGAZINE, IEEE SERVICE CENTER. PISCATAWAY, N.J, US, Bd. 36, Nr. 4, 1. April 1998 (1998-04-01), Seiten 90-95, XP000752577 ISSN: 0163-6804

## Beschreibung

Die Erfindung bezieht sich auf ein drahtloses Netzwerk mit mehreren Terminals und einer zugeordneten zentralen Station, welches nach Empfang von Anforderungswünschen zur drahtlosen Übertragung von Paketen zwischen einem Sende- und einem Empfangsterminal während eines Zeitmultiplexrahmens zur Zuweisung von Zeitschlitzen eines nachfolgenden Zeitmultiplexrahmens für die drahtlose Übertragung von Paketen von einem Sende- zu einem Empfangsterminal vorgesehen ist.

Über ein solches drahtloses Netzwerk können beispielsweise beliebige Daten oder Pakete übertragen werden. Eine Paketübertragung ist z.B. der asynchrone Transfermodus (ATM = asynchronous transfer mode), der entwickelt worden ist, um Multimedia-Daten zwischen Netzknoten bzw. Vorrichtungen eines Netzknotens eines Netzwerks zu übertragen. In einem solchen ATM-Netzwerk werden vor einem Verbindungsaufbau beispielsweise zwischen zwei Netzknoten Vereinbarungen über Übertragungsparameter (z.B. über die Bandbreite) geführt und nach der Vereinbarung verschiedene Arten von Daten (z.B. Video- und Audio-Daten) in Zellen eingefügt. Diese Zellen werden dann über eine einzelne Verbindung zu einer Empfangsvorrichtung gesendet. Die Empfangsvorrichtung prüft, ob die empfangenen Daten fehlerhaft übertragen worden sind, und wenn es erforderlich ist, sendet die Empfangsvorrichtung als Reaktion auf die empfangenen Zellen Daten zur Sendevorrichtung zurück.

Der asynchrone Transfermodus ist eigentlich entwickelt worden, um Daten über drahtgebundene Medien (z.B. optische Kabel oder Kupferkabel) zu übertragen. Es gibt aber auch drahtlose ATM-Netzwerke, welche als Ersatz für die drahtgebundenen Medien entwickelt worden sind. Ein solches drahtloses Netzwerk überträgt z.B. Daten über Funk oder Infrarot-Verbindungen und ist z.B. aus der EP 0 831 620 A2 bekannt.

Hier wird ein Protokoll für die MAC-Schicht (MAC = medium access protocol) eines drahtlosen ATM-Netzwerkes verwendet.

Aus der EP 0 889 611 A1 ist noch ein Zeitmultiplexverfahren und ein Kommunikationssystem mit einer zentralen Station und Netzwerk-Terminals bekannt. Die zentrale Station ist für die Zuweisung von Zeitschlitzen für die Terminals verantwortlich. Hierbei werden sogenannte "Group identifier" verwendet, die eine vorbestimmte Gruppe von Terminals in einer vorbestimmten Reihenfolge definieren.

Der Erfindung hegt die Aufgabe zugrunde, ein drahtloses Netzwerk zu scharfen, bei dem ein optimierter Zeitschlitzsortieralgorithmus verwendet wird.

Die Aufgabe wird durch ein drahtloses Netzwerk der eingangs genannten Art dadurch gelöst, dass die zentrale Station eingerichtet ist alle Anforderungswünsche zu empfangen, wobei die zentrale Station umfasst:
- ein Mittel, das nach Erhalt aller Anforderungswünsche zur Bestimmung einer ersten Untermenge mit allen Sendeterminals, welche an mehrere Empfangsterminals Pakete auszusenden beabsichtigen, und einer zweiten Untermenge mit den restlichen Sendeterminals vorgesehen ist, und
- ein Mittel, das zur Festlegung der Sendereihenfolge der Sendeterminals der ersten Untermenge entsprechend der abnehmenden Anzahl der einem Sendeterminal zugeordneten Empfangsterminals vorgesehen ist, und
- ein Mittel, das zur Aufteilung der einem Sendeterminal zugeordneten Empfangsterminals der ersten Untermenge in eine erste Gruppe, welche alle schon als Sendeterminal verwendeten Empfangsterminals enthält, und in eine zweite Gruppe mit allen anderen Empfangsterminals vorgesehen ist,
- und ein Mittel, das innerhalb der beiden Gruppen zur Festlegung der Empfangsreihenfolge entsprechend der Sendereihenfolge als Sendeterminal vorgesehen ist und
- ein Mittel, das zuerst zur Auswahl der Empfangsterminals der zweiten Gruppe vorgesehen ist.

In einem solchen drahtlosen Netzwerk, welches ein TDMA-Verfahren verwendet, wird ein bestimmter Frequenzbereich genutzt. Es ist dabei unmöglich, dass eine Sende- und Empfangsvorrichtung einer zentralen Station (Basisstation oder zentrales Terminal) ohne Verzögerung aus einem Empfangsmodus in einen Sendemodus und umgekehrt umschaltet. Es gibt eine nicht vernachlässigbare minimale Zeit, welche abkürzend als Zeit MT bezeichnet wird, zwischen den beiden Moden. Die Zeit MT ist ein Parameter eines Funksystems und muss von dem für den Medienzugriff (MAC = Medium Access Control) verantwortlichen Teil einer Sende- und Empfangsvorrichtung berücksichtigt werden. Um alle möglichen Verkehrsverhältnisse in dem drahtlosen Netzwerk zu berücksichtigen und den verschiedenen Terminals genügend Zeit zur Umschaltung ihres Übertragungsmodus zu geben, wird eine Zeit definiert, die i.a. größer ist als die Zeit MT und als Umschaltzeit OTT bezeichnet wird. Die durch die Umschaltzeit OTT bedingte Verzögerung wird durch die Erfindung optimiert.

Die zentrale Station sortiert die Sendereihenfolge der Sendeterminals und die Empfangs reihenfolge der einem Sendeterminal zugeordneten Empfangsterminals. Eine erste Untermenge enthält dabei alle Sendeterminals, welche an mehrere Empfangsterminals Pakete auszusenden beabsichtigen, und einer zweiten Untermenge mit den restlichen Sendeterminals. Die Sendeterminals der ersten Untermenge werden so sortiert, dass zuerst das Sendeterminal mit den meisten Empfangsterminals senden kann und zuletzt das Sendeterminal mit den geringsten zugeordneten Empfangsterminals Die einem Sendeterminal zugeordneten Empfangsterminals der ersten Untermenge werden in zwei unterschiedliche Gruppen aufgeteilt. Eine erste Gruppe enthält alle Empfangsterminals, welche zuvor schon als Sendeterminals zugeordnet worden sind. Die Reihenfolge der beiden Gruppen ist so festgelegt, dass die Empfangsterminals der zweiten Gruppe zuerst Daten empfangen können.

In den Ansprüchen 2 und 3 sind unterschiedliche Methoden zur Verteilung der Sendeterminals der zweiten Untermenge in die Sendereihenfolge der ersten Untermenge dargestellt. Die Erfindung bezieht sich des weiteren auch auf eine zentrale Station in einem drahtlosen Netzwerk mit mehreren Terminals.

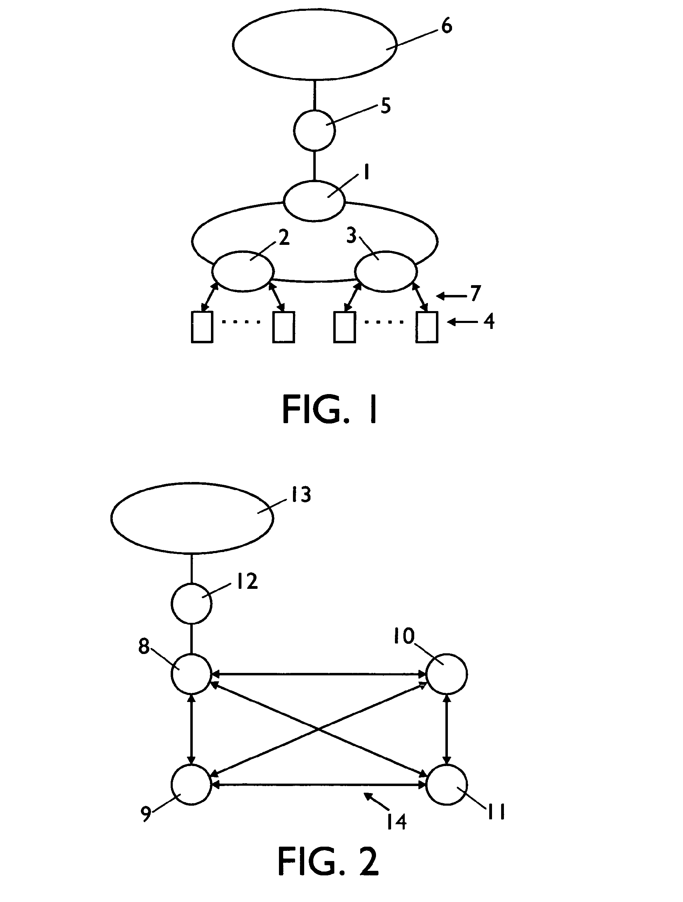

Ausführungsbeispiele der Erfindung werden nachstehend anhand der Fig. 1 und 2 näher erläutert. Die Fig. zeigen jeweils Ausführungsbeispiele eines Netzwerks zur Paketübertragung.

Das Netzwerk mit einer Basisstation-Konfiguration nach Fig. 1 enthält verschiedene Basisstationen 1 bis 3, welche die Kommunikation zwischen verschiedenen drahtlosen Terminals 4 steuern. Die Basisstation 1 ist über eine Verbindungsstation 5 (gateway) mit einem drahtgebundenen Netzwerk 6 gekoppelt und tauscht Pakete zwischen der Verbindungsstation 5 und einer bestimmten Basisstation 2 und/oder 3 in Abhängigkeit von der Adresse eines Paketes aus Die Verbindungsstation 5 dient zum Austausch von Paketen mit beispielsweise Audio- und Video-Daten zwischen dem drahtgebundenen und einem drahtlosen Netzwerk aus Basisstationen 1 bis 3 und Terminals 4. Die Basisstationen 2 und 3 enthalten jeweils eine Sende- und Empfangsvorrichtung, mit denen sie Daten mit den Terminals 4 über Funkverbindungen 7 austauschen. Die Basisstationen 1 bis 3 und die Verbindungsstation 5 sind typischerweise über optische oder metallische Kabel miteinander verbunden.

Das in Fig 2 dargestellte Netzwerk mit einer Adhoc-Konfiguration enthält verschiedene drahtlose Terminals 8 bis 11, von denen ein als Controller bezeichnetes Terminal die Kommunikation zwischen den Terminals steuert. Das Terminal 8 ist über eine Verbindungsstation 12 (gateway) mit einem drahtgebundenen Netzwerk 13 gekoppelt. Die Verbindungsstation 12 ist typischerweise über optische oder metallische Kabel mit dem drahtgebundenen Netzwerk und dem Terminal 8 verbunden. Die drahtlosen Terminals 8 bis 11 (und ebenso die Terminals 4 in Fig. 1), die jeweils eine Sende- und Empfangsvorrichtung und wenigstens eine Endstation aufweisen, tauschen Daten über Funkverbindungen 14 aus Eine Endstation kann beispielsweise ein Personal-Computer, eine Videokamera, ein digitales Telefon, ein digitaler Fernseher oder eine Set-Top-Box sein.

Wie erwähnt ist eines der Terminals in Fig. 2 als zentraler Controller ausgebildet, der den Funkverkehr zwischen den Terminals 8 bis 11 steuert. Beispielsweise kann das Terminal 11 der zentrale Controller sein. Ein Datenaustausch kann jedem Terminal 8 bis 11 stattfinden. Ein Austausch von Steuerdaten findet hauptsächlich zwischen einen Terminal 8 bis 10 und dem Controller 11 statt. Es ist jedoch auch möglich, dass die Terminals 8 bis 10 direkt miteinander Steuerdaten austauschen.

Die Kommunikation in dem drahtlosen Netzwerk basiert auf einem TDMA-Rahmen (TDMA= Time Division Multiplex Access), welcher Steuerkanale oder Steuerzeitschlitze und Datenkanäle oder Datenzeitschlitze enthält. Mit Hilfe eines Steuerkanals kann jedes Terminal bei einer Basisstation (vgl. Fig. 1) oder einem Controller (vgl. Fig 2) einen oder mehrere Datenkanäle für die Übertragung von Zellen anfordern. Die Basisstation oder der Controller weisen den Terminals 4 bzw. 8 bis 10 Datenkanäle zu, so dass während des nächsten, auf einen Anforderungswunsch folgenden TDMA-Rahmens Daten übertragen werden können.

In einem solchen Netzwerk nach den Fig. 1 oder 2, welches ein TDMA-Verfahren verwendet, wird ein bestimmter Frequenzbereich genutzt. Es ist dabei unmöglich, dass eine Sende- und Empfangsvorrichtung einer Basisstation oder eines Terminals ohne Verzögenmg aus einem Empfangsmodus in einen Sendemodus und umgekehrt umschaltet. Es gibt eine nicht vernachlässigbare minimale Zeit, welche abkürzend als Zeit MT bezeichnet wird, zwischen den beiden Moden. Die Zeit MT ist ein Parameter eines Funksystems und muss von dem für den Medienzugriff (MAC = Medium Access Control) verantwortlichen Teil einer Sende- und Empfangsvorrichtung berücksichtigt werden.

Um alle möglichen Verkehrsverhältnisse in dem drahtlosen Netzwerk zu berücksichtigen und den verschiedenen Terminals genügend Zeit zur Umschaltung ihres Übertragungsmodus zu geben, wird eine Zeit definiert, die i.a größer ist als die Zeit MT und als Umschaltzeit OTT bezeichnet wird. Die durch die Umschaltzeit OTT bedingte Verzögerung im drahtlosen Netzwerk zu optimieren, wird eine im folgenden beschriebener, Algorithmus zur Zeitschlitz-Zuweisung für die Datenübertragung verwendet.

Bei dem zu beschreibenden Algorithmus wird von einer von der Basisstation oder dem Controller festgelegten Anzahl von N Zeitschlitzen ausgegangen, die ein TDMA-Rahmen für die Datenübertragung zur Verfügung stellt. Der Algorithmus entscheidet welche N_i_j Zeitschlitze für die Übertragung von Daten von einem Sendeterminal (sendenden Terminal) WT_i zu einem Empfangsterminal (empfangenden Terminal) WT_j für den folgenden TDMA-Rahmen zugewiesen wird. N_i_j bezeichnet also die Anzahl der Zeitschlitze für ein Terminal WT_i, welches Pakete zum Terminal WT_j senden möchte. Beispielsweise sollen 3 Pakete von einem Terminal WT_1 zu einem Terminal WT_2 {(N = 3)_1_2)}, 4 Pakete von dem Terminal WT_1 zu dem Terminal WT_4 {(N = 5)_1_4}, 4 Pakete von dem Terminal WT_1 zu dem Terminal WT_3 {(N = 4)_1_3}, Paket von dem Terminal WT_3 zu dem Terminal WT_1 {(N = 1)_3_1}, 2 Pakete von dem Terminal WT_3 zu dem Terminal WT_2 {(N = 2)_3_2}, 2 Pakete von dem Terminal WT_2 zu dem Terminal WT_3 {(N = 2)_2_3}, 3 Pakete von dem Terminal WT_2 zu dem Terminal WT_4 {(N = 3)_2_4} und 5 Pakete von dem Terminal WT_4 zu dem Terminal WT_2 {(N = 5)_4_2} übertragen werden. Hierbei bedeutet (N= x)_i_j, dass N_i_j Zeitschlitze für ein Terminal WT_i vorgesehen sind, welches x Pakete zum Terminal WT_j sendet.

Beispielsweise kann folgende Übertragungsreihenfolge ohne Anwendung des Algorithmus festgelegt werden:
I(N =3)_1_2), (N =5)_1_4, (N =4)_1_3, (N =1)_3_1, (N =2)_3_2, (N =2)_2_3, (N=3)_2_4, (N= 5)_4_2 |

Bei dieser Übertragungsreihenfolge findet ein Verzögerung durch die Umschaltzeit OTT bei einem Moduswechsel von (N =4)_1_3 zu (N =1)_3_1 statt, da das Terminal WT_1 vom Sende- in den Empfangsmodus und das Terminal WT_3 vom Empfangs- in den Sendemodus umschalten muss, bei einem Moduswechsel von (N = 2)_3_2 zu (N = 2)_2_3, da das Terminal WT_3 vom Sende- in den Empfangsmodus und das Terminal WT_2 vom Empfangs- in den Sendemodus umschalten muss, und bei einem Moduswechsel von (N = 3)_2_4 zu (N = 5)_4_2,, da das Terminal WT_2 vom Sende- in den Empfangsmodus und das Terminal WT_4 vom Empfangs- in den Sendemodus umschalten muss.

Der folgende Algorithmus minimiert die durch die Umschaltzeit bedingte Verzögerung. Zuerst wird eine Variable R(i) für jedes Terminal WT_i definiert, welches die Anzahl der Empfangsterminals angibt, mit denen WT_i im nächsten TDMA-Rahmen Daten austauscht. Für jedes N_i_j variiert j dann von 1 bis R(i) (j = 1, ..., R(i)). Die Gesamtzahl von Zeitschlitzen, welche für ein Terminal WT_i reserviert werden, kann dann durch die Variable S(i) mit
S(i) =N_i_1 +N_i_2 + ... +N_i_R(i)
angegeben werden. Für das oben angegebene Beispiel ergibt sich damit:
S(1) =12,S(2) = 5, S(3) = 3, S(4) = 5 und R(1) = 3, R(2) = 2, R(3) = 2, R(4) =1.

Anschließend werden alle Sendeterminals WT_i in zwei Untermengen A und B getrennt. Die Untermenge A enthält alle Sendeterminals WT_i mit R(i) > 1 und die Untermenge B alle Sendeterminals WT_i mit R(i) = 1.

Bei dem oben angegebenen Beispiel sind die Terminals WT_1 mit R(1) = 3, WT_2 mit R(2) = 2 und WT_3 mit R(3) = 2 Bestandteil der Untermenge A und das Terminal WT_4 mit R(4) = 1 Bestandteil der Untermenge B.

Für die Untermenge A wird die Sortierreihenfolge so festgelegt, dass das Terminal WT_i seine S(i) Pakete eher als Terminal WT_j sendet, wenn R(i) > R(j). Falls R(i) = R(j) ist, dann wird die Sendereihenfolge zufällig gewählt. Nachdem die Sortierreihenfolge auf diesem Weg bestimmt worden ist, werden zu einem Sendeterminal WT_i die Reihenfolge der Empfangsterminals WT_j bestimmt. Die von einem Sendeterminal WT_i Pakete empfangenden Empfangsterminals WT_j werden in zwei Gruppen A_1 und A_2 eingeteilt.

Die Gruppe A_1 enthält alle Empfangsterminals WT_j, welche ihre Übertragung (Sen dung) zu anderen Terminals schon beendet haben (bevor WT_i die Sendung von Paketen beginnt). Die Gruppe A_2 enthält alle Empfangsterminals WT_j, welche ihre Übertragung (Sendung) noch nicht gestartet haben und ihre Übertragung starten, nachdem die Terminals WT_i ihre Übertragung beendet haben.

Die Reihenfolge der Empfangsterminals WT_j zu einem Sendeterminal WT_i wird dann so festgelegt, dass alle Terminals WT_j der Gruppe A_1 die Pakete von WT_i später als diejenigen der Gruppe A_2 empfangen. Innerhalb der Gruppen A_1 und A_2 werden die Terminals WT_j jeweils folgendermaßen sortiert:

Die Gruppe A_1 (erste Gruppe) wird so sortiert, dass das Sendeterminal WT_i seine Pakete in N_i_m Zeitschlitzen zu dem Empfangsterminal WT_m eher als seine Pakete in N_i_n Zeitschlitzen zu dem Empfangsterminal WT_n sendet, wenn das Terminal WT_m seine Übertragung eher als das Terminal WT_n beendet (WT_m ist früher als WT_n Sendeterminal).
Die Gruppe A_2 (zweite Gruppe) wird so sortiert, dass das Sendeterminal WT_i seine Pakete in N_i_m Zeitschlitzen zu dem Empfangsterminal WT_m eher als seine Pakete in N_i_n Zeitschlitzen zu dem Empfangsterminal WT_n sendet, wenn das Terminal WT_m seine Übertragung eher als das Terminal WT_n startet (WT_m ist früher als WT_n Sendeterminal).

Damit ist der Sortier-Algorithmus für die Untermenge A beendet.

Bei dem oben angegebenen Beispiel wird bei Anwendung des Sortier-Algorithmus für die Untermenge A zuerst eine Sortierung für das Sendeterminal WT_1, dann für das Sendeterminal WT_3 und darauffolgend für das Sendeterminal WT_2 durchgeführt. Es konnte auch nach WT_1 zuerst eine Sortierung für das Sendeterminal WT_2 und dann für Sendeterminal WT_3 erfolgen, da R(2) = R(3) ist. Der oben beschriebene Algorithmus für die Gruppen A_1 und A_2 führt dann eine Sortierung der Pakete von WT_1 empfangenden Empfangsterminals durch. Es ergibt sich dann folgende Reihenfolge:
|(N =4)_1_3, (N =3)_1_2, (N =5)_1 4 |

Für die Sendeterminals WT_3 und WT_2 wird anschließend der Algorithmus für die Gruppen A_1 und A_2 angewendet. Es ergibt sich dann insgesamt die folgende Sortierreihenfolge für die Untermenge A
I(N =4)_1_3, (N =3)_1_2, (N = 5)_1_4, (N = 2)_3_2, (N =1)_3_1, (N =3)_2_4, (N=2)_2_3 I

Nachdem die Sortierung für die Untermenge A abgeschlossen ist, erfolgen die folgenden Schritte für die Sortierung der Terminals der Untermenge B. Die Untermenge B enthält K Terminals WT_i. Es wird ein Sendezeiger p definiert, der das letzte sendende Sendeterminal WT_x kennzeichnet, bevor ein Terminal der Untermenge B seine Übertragung startet, und ein Empfangszeiger q, der das Terminal kennzeichnet, das zuletzt Daten von einem beliebigen Terminal empfangen hat. Für die Bestimmung des ersten Sendeterminals aus der Untermenge B zeigen p und q auf das letzte Sende- bzw. Empfangsterminal der bisher festgelegten Sortierreihenfolge für die Untermenge A

In einem ersten Schritt wird überprüft, ob K = 1 ist. Ist dies der Fall, wird nur noch ein einziges Terminal WT_i der Untermenge B als letztes Sendeterminal in die Sortierreihenfolge gestellt. Damit ist das zugehörige Empfangsterminal des Sendeterminals auch bestimmt, da alle Sendeterminals in der Untermenge B nur ein Empfangsterminal haben. Die Sortierung ist dann für die Untermenge B beendet.

In einem zweiten Schritt, wird überprüft, ob K > 1 ist. Ist dies der Fall, wird das Terminal WT_i aus der Untermenge B gelöscht und als ausgewähltes Terminal WT_i markiert, wenn es ein Terminal WT_i gibt, welches nicht durch den Empfangszeiger q gekennzeichnet ist und das von dem Terminal WT_i Daten empfangende Empfangsterminal nicht durch den letzten Sendezeiger p gekennzeichnet ist. Wenn diese Bedingung erfüllt ist, wird das Terminal WT_i aus der Untermenge B gestrichen und dann zu einem dritten Schritt gegangen (Terminal WT_i hat zuvor keine Daten empfangen und das zugehörige Empfangsterminal hat zuvor keine Daten gesendet). Wenn diese Bedingung nicht erfüllt ist, wird ein beliebiges Terminal WT_i aus der Untermenge B ausgewählt, welches nicht durch den letzten Empfangszeiger q gekennzeichnet ist, und als ausgewähltes Terminal WT_i markiert (Terminal WT_i hat zuvor nicht Daten empfangen, aber sein zugehöriges Empfangsterminal hat zuvor Daten gesendet). Dann wird zu dem dritten Schritt gegangen.

In dem dritten Schritt wird das im zweiten Schritt ausgewählte Terminal WT_i an das Ende der Zuweisungsliste gesetzt. Das ausgewählte Terminal WT_i wird mit dem Sendezeiger p und das Daten von WT_i empfangende Terminal mit dem Empfangszeiger q gekennzeichnet. K wird um 1 dekrementiert und zum ersten Schritt gegangen.

Bei dem Beispiel gibt es nur das Terminal WT_4, welches zur Untermenge B gehört. Dieses Terminal WT_4 möchte fünf Pakete zum empfangenden Terminal 2 übertragen. Somit ergibt sich für beide Untermengen A und B die folgende, optimierte Sortierreihenfolge:
|(N =4)_1_3, (N =3)_1_2, (N =5)_1_4, (N =2)_3_2, (N =1)_3_1, (N =3)_2_4, (N=2)_2_3, (N=5)_4_2|

Bei diesem Beispiel gibt es nur eine Verzögerung durch eine Umschaltzeit des Terminals WT_2, da dieses nach Sendung von zwei Paketen zum Terminal WT_3 in den Empfangsmodus umschaltet, um fünf Pakete von dem Terminal WT_4 zu empfangen. Bei den anderen Terminal gibt es keine Verzögerung durch die Umschaltzeit. Beispielsweise hat das Terminal WT_1 nach der Aussendung von vier Paketen zu dem Terminal WT_3, nach der Aussendung von drei Paketen zu dem Terminal WT_2 und nach der Aussendung von fünf Paketen zu dem Terminal WT_4 während der Zeitdauer von zwei Zeitschlitzen genügend Zeit aus dem Sende- in den Empfangsmodus umzuschalten. Während dieser Zeitdauer von zwei Zeitschlitzen überträgt das Terminal WT_3 zwei Pakete zu dem Terminal WT_2.

Es ist auch möglich, die Sortierreihenfolge so festzulegen, dass die Terminals der zweiten Untermenge vor den Terminals der ersten Untermenge senden bzw. empfangen. Die Terminals der zweiten Untermenge können nach Festlegung der Sortierreihenfolge der ersten Untermenge auch auf die sortierten Terminals der ersten Untermenge verteilt werden. Hierbei muss beachtet werden, dass ein Sendeterminal weder im vorhergehenden noch im nachfolgenden Zeitschlitz ein Empfangsterminal ist und ein Empfangsterminal weder im vorhergehenden noch im nachfolgenden Zeitschlitz ein Sendeterminal ist.

## Patentansprüche

1. Drahtloses Netzwerk mit mehreren Terminals (4, 8 bis 11) und einer zugeordneten zentralen Station (1, 11), wobei das Netzwerk Mittel aufweist, die nach Empfang von Anforderungswünschen zur drahtlosen Übertragung von Paketen zwischen einem Sende- und einem Empfangsterminal während eines Zeitmultiplexrahmens zur Zuweisung von Zeitschlitzen eines nachfolgenden Zeitmultiplexrahmens für die drahtlose Übertragung von Paketen von einem Sende- zu einem Empfangsterminal vorgesehen sind,
**dadurch gekennzeichnet,**
**dass** die zentrale Station (1,11) eingerichtet ist alle Anforderungswünsche zu empfangen, wobei die zentrale Station (1,11) umfasst:
- ein Mittel, das nach Erhalt aller Anforderungswüsche zur Bestimmung einer ersten Untermenge mit allen Sendeterminals, welche an mehrere Empfangsterminals Pakete auszusenden beabsichtigen, und einer zweiten Untermenge mit den restlichen Sendeterminals vorgesehen ist, und
- ein Mittel, das zur Festlegung der Sendereihenfolge der Sendeterminals der ersten Untermenge entsprechend der abnehmenden Anzahl der einem Sendeterminal zugeordneten Empfangsterminals vorgesehen ist, und
- ein Mittel, das zur Aufteilung der einem Sendeterminal zugeordneten Empfangsterminals der ersten Untermenge in eine erste Gruppe, welche alle schon als Sendeterminal verwendeten Empfangsterminals enthält, und in eine zweite Gruppe mit allen anderen Empfangsterminals vorgesehen ist,
- und ein Mittel, das innerhalb der beiden Gruppen zur Festlegung der Empfangsreihenfolge entsprechend der Sendereihenfolge als Sendeterminal vorgesehen ist und
- ein Mittel, das zuerst zur Auswahl der Empfangsterminals der zweiten Gruppe vorgesehen ist.

2. Drahtlose Netzwerk nach Anspruch 1,
**dadurch gekennzeichnet,**
**dass** die zentrale Station (4, 8 bis 11) ein Mittel zur Festlegung der Sendereihenfolge der Sendeterminals der zweiten Untermenge in der Art aufweist, dass zuerst alle Sendeterminals gewählt werden, welche zuvor weder Sende- noch Empfangsterminal gewesen sind und dann alle Sendeterminals gewählt werden, welche zuvor kein Empfangsterminal gewesen sind, und
**dass** die Sendeterminals der zweiten Untermenge zur Sendung entweder vor oder nach den Sendeterminals der ersten Untermenge vorgesehen sind.

3. Drahtloses Netzwerk nach Anspruch 1,
**dadurch gekennzeichnet,**
**dass** die zentrale Station (1, 11) ein Mittel zur Aufteilung der Sendeterminals der zweiten Untermenge in die Sendereihenfolge der ersten Untermenge in der Art aufweist, dass ein Sendeterminal im vorhergehenden und nachfolgenden Zeitschlitz kein Empfangsterminal und ein Empfangsterminal im vorhergehenden und nachfolgenden Zeitschlitz kein Sendeterminal ist

4. Zentrale Station in einem drahtlosen Netzwerk mit mehreren Terminals(4, 8 bis 11), wobei die zentrale Station (1, 11) Mittel aufweist, die nach Empfang von Anforderungswünschen zur drahtlosen Übertragung von Paketen zwischen einem Sende- und einem Empfangsterminal während eines Zeitmultiplexrahmens zur Zuweisung von Zeitschlitzen eines nachfolgenden Zeitmultiplexrahmens für die drahtlose Übertragung von Paketen von einem Sende- zu einem Empfangsterminal vorgesehen sind,
**dadurch gekennzeichnet,**
**dass** die zentrale Station (1,11) eingerichtet ist alle Anforderungswünsche zu empfangen, wobei die zentrale Station (1,11)
- ein Mittel zur Bestimmung nach Erhalt aller Anforderungswünsche einer ersten Untermenge mit allen Sendeterminals, welche an mehrere Empfangsterminals Pakete auszusenden beabsichtigen, und einer zweiten Untermenge mit den restlichen Sendeterminals aufweist, und
- ein Mittel zur Festlegung der Sendereihenfolge der Sendeterminals der ersten Untermenge entsprechend der abnehmenden Anzahl der einem Sendeterminal zugeordneten Empfangsterminals aufweist, und
- ein Mittel zur Aufteilung der einem Sendeterminal zugeordneten Empfangsterminals der ersten Untermenge in eine erste Gruppe, welche alle schon als Sendeterminal verwendeten Empfangsterminals enthält, und in eine zweite Gruppe mit allen anderen Empfangsterminals aufweist,
- und ein Mittel aufweist, das innerhalb der beiden Gruppen zur Festlegung der Empfangsreihenfolge entsprechend der Sendereihenfolge als Sendeterminal vorgesehen ist und
- ein Mittel aufweist, das zuerst zur Auswahl der Empfangsterminals der zweiten Gruppe vorgesehen ist.

## Claims

1. A wireless network comprising a plurality of terminals (4, 8 to 11) and an assigned central station (1, 11), which network comprises means which, after receiving requests for the wireless transmission of packets between a transmitting and a receiving terminal during a time multiplex frame, is provided for assigning time slots of a following time multiplex frame for the wireless transmission of packets from a transmitting to a receiving terminal,
**characterized in that** the central station (1, 11) is provided for receiving all requests, which central station (1, 11) comprises:
- a means for determining, after all requests have been received, a first subset of all the transmitting terminals that intend to transmit packets to a plurality of receiving terminals, and a second subset containing the rest of the transmitting terminals, and
- a means for determining the order in which the transmitting terminals of the first subset transmit in accordance with the decreasing number of receiving terminals assigned to a transmitting terminal, and
- a means for subdividing the receiving terminals of the first subset assigned to a transmitting terminal into a first group that contains all the receiving terminals already used as transmitting terminals, and into a second group that contains all the other receiving terminals,
- and a means for determining the receiving order in the two groups in accordance with the transmission order as a transmitting terminal and
- a means that is provided for first selecting the receiving terminal of the second group.

2. A wireless network as claimed in claim 1, **characterized in that** the central station (1, 11) is provided for determining the transmission order of the transmitting terminals of the second subset in such a way that first all the transmitting terminals are selected that have not previously been either a transmitting or a receiving terminal and then all the transmitting terminals are selected that have not previously been a receiving terminal and **in that** the transmitting terminals of the second subset are provided for transmitting either before or after the transmitting terminals of the first subset.

3. A wireless network as claimed in claim 1, **characterized in that** the central station (1, 11) is provided for dividing the transmitting terminals of the second subset into the transmission order of the first subset in such a way that a transmitting terminal is not a receiving terminal in the preceding and following time slot and a receiving terminal is not a transmitting terminal in the preceding and following time slot.

4. A central station in a wireless network comprising a plurality of terminals (4, 8 to 11), which central station (1, 11), after receiving requests for the wireless transmission of packets between a transmitting and a receiving terminal during a time multiplex frame, is provided for assigning time slots of a following time multiplex frame for the wireless transmission of packets from a transmitting to a receiving terminal,
**characterized in that** the central station (1, 11) is provided for receiving all requests, which central station (1, 11) comprises:
- a means for determining, after receiving all requests, a first subset of all the transmitting terminals that intend to transmit packets to a plurality of receiving terminals, and a second subset containing the rest of the transmitting terminals, and
- a means for determining the order in which the transmitting terminals of the first subset transmit in accordance with the decreasing number of receiving terminals assigned to a transmitting terminal, and
- a means for subdividing the receiving terminals of the first subset assigned to a transmitting terminal into a first group that contains all the receiving terminals already used as transmitting terminals, and into a second group that contains all the other receiving terminals,
- and a means for determining the receiving order in the two groups in accordance with the transmission order as a transmitting terminal and
- a means for first selecting the receiving terminal of the second group.

## Revendications

1. Réseau sans fil avec plusieurs terminaux (4, 8 à 11) et une station centrale (1, 11) attribuée, le réseau présentant des moyens qui, après réception de souhaits de demande vers la transmission sans fil de paquets entre un terminal de transmission et un terminal de réception pendant un cadre de multiplexage temporel pour l'attribution d'intervalles de temps d'un cadre de multiplexage temporel suivant pour la transmission sans fil de paquets d'un terminal de transmission vers un terminal de réception,
**caractérisé en ce**
**que** la station centrale (1, 11) est agencée pour recevoir tous les souhaits de demande, la station centrale (1, 11) comprenant :
- un moyen qui est prévu après réception de tous les souhaits de demande pour la détermination d'une première sous-quantité avec tous les terminaux de transmission qui envisagent de transmettre des paquets sur plusieurs terminaux de réception et une deuxième sous-quantité avec les terminaux de transmission résiduels, et
- un moyen qui est prévu pour la détermination de l'ordre des émetteurs des terminaux de transmission de la première sous-quantité correspondant au nombre décroissant des terminaux de réception attribués à un terminal de transmission, et
- un moyen qui est prévu pour la répartition des terminaux de réception de la première sous-quantité, attribués à un terminal de transmission, en un premier groupe qui contient tous les terminaux de réception déjà utilisés comme terminal de transmission et en un deuxième groupe avec tous les autres terminaux de réception,
- et un moyen qui est prévu dans les deux groupes pour la détermination de l'ordre de réception en fonction de l'ordre de transmission comme terminal de transmission et
- un moyen qui est d'abord prévu pour la sélection des terminaux de réception du deuxième groupe.

2. Réseau sans fil selon la revendication 1,
**caractérisé en ce**
**que** la station centrale (4, 8 à 11) présente un moyen de distribution de l'ordre de transmission des terminaux de transmission de la deuxième sous-quantité de telle sorte que l'on sélectionne d'abord tous les terminaux de transmission qui n'ont été précédemment ni un terminal de transmission, ni un terminal de réception, puis tous les terminaux de transmission qui n'ont pas été précédemment un terminal de réception, et que les terminaux de réception de la deuxième sous-quantité ne sont prévus pour la transmission ni avant, ni après les terminaux de transmission de la première sous-quantité.

3. Réseau sans fil selon la revendication 1,
**caractérisé en ce**
**que** la station centrale (1, 11) présente un moyen de distribution des terminaux de transmission de la deuxième sous-quantité dans l'ordre de transmission de la première sous-quantité de telle manière qu'un terminal de transmission dans les intervalles de temps précédent et suivant ne soit pas un terminal de réception et un terminal de réception ne soit pas un terminal de transmission dans les intervalles de temps précédent et suivant.

4. Station centrale dans un réseau sans fil avec plusieurs terminaux (4, 8 à 11), la station centrale (1, 11) présentant des moyens qui, après réception de souhaits de demande vers la transmission sans fil de paquets entre un terminal de transmission et un terminal de réception pendant un cadre de multiplexage temporel pour l'attribution d'intervalles de temps d'un cadre de multiplexage temporel suivant pour la transmission sans fil de paquets d'un terminal de transmission vers un terminal de réception,
**caractérisé en ce**
**que** la station centrale (1, 11) soit agencée pour recevoir tous les souhaits de demande, la station centrale (1, 11) comprenant :
- un moyen qui est prévu après réception de tous les souhaits de demande pour la détermination d'une première sous-quantité avec tous les terminaux de transmission qui envisagent de transmettre des paquets sur plusieurs terminaux de réception et une deuxième sous-quantité avec les terminaux de transmission résiduels, et
- un moyen qui est prévu pour la détermination de l'ordre des émetteurs des terminaux de transmission de la première sous-quantité correspondant au nombre décroissant des terminaux de réception attribués à un terminal de transmission, et
- un moyen qui est prévu pour la répartition des terminaux de réception de la première sous-quantité, attribués à un terminal de transmission, en un premier groupe qui contient tous les terminaux de réception déjà utilisés comme terminal de transmission et en un deuxième groupe avec tous les autres terminaux de réception,
- et un moyen qui est prévu dans les deux groupes pour la détermination de l'ordre de réception en fonction de l'ordre de transmission comme terminal de transmission et
- un moyen qui est d'abord prévu pour la sélection des terminaux de réception du deuxième groupe.
